Europäisches Patentamt

European Patent Office

Office européen des brevets

(11) Veröffentlichungsnummer: **0 325 149 B1**

## EUROPÄISCHE PATENTSCHRIFT

(45) Veröffentlichungstag der Patentschrift: **25.08.93**

(21) Anmeldenummer: **89100358.4**

(22) Anmeldetag: **11.01.89**

(51) Int. Cl.⁵: $G01D\ 5/244$

(54) **Positionsmesseinrichtung.**

(30) Priorität: **22.01.88 DE 3801763**

(43) Veröffentlichungstag der Anmeldung:
**26.07.89 Patentblatt  89/30**

(45) Bekanntmachung des Hinweises auf die
Patenterteilung:
**25.08.93 Patentblatt  93/34**

(84) Benannte Vertragsstaaten:
**AT CH DE FR GB IT LI**

(56) Entgegenhaltungen:
**EP-A- 0 121 658**
**US-A- 3 427 463**

(73) Patentinhaber: **Dr. Johannes Heidenhain GmbH**
**Dr.-Johannes-Heidenhain-Strasse 5 Postfach 1260**
**D-83292 Traunreut(DE)**

(72) Erfinder: **Kraus, Heinz**
**Traunring 74 E**
**D-8225 Traunreut(DE)**

Rank Xerox (UK) Business Services
(3.10/3.6/3.3.1)

## Beschreibung

Die Erfindung betrifft eine Positionsmeßeinrichtung zum Messen der Relativlage zweier Objekte gemäß dem Oberbegriff des Anspruchs 1.

Derartige Positionsmeßeinrichtungen werden insbesondere bei Bearbeitungsmaschinen zur Messung der Relativlage eines Werkzeugs bezüglich eines zu bearbeitenden Werkstücks sowie bei Koordinatenmeßmaschinen zur Ermittlung von Lage und/oder Abmessungen von Prüfobjekten eingesetzt.

Bei solchen Positionsmeßeinrichtungen unterscheidet man zwischen inkrementalen Längen- oder Winkelmeßeinrichtungen und absoluten Längen- oder Winkelmeßeinrichtungen (Codemeßeinrichtungen).

Eine inkrementale Positionsmeßeinrichtung weist einen Teilungsträger mit einer inkrementalen Teilung auf, die von einer Abtasteinrichtung zur Erzeugung von periodischen Abtastsignalen abgetastet wird, aus denen in einer Auswerteeinrichtung Zählimpulse für jedes Teilungsinkrement gewonnen werden. Die Zählung dieser Zählimpulse in einem Zähler liefert den momentanen Positionsmeßwert und erfolgt jeweils von frei wählbaren Meßbezugslagen dieser inkrementalen Teilung ausgehend; diesen Meßbezugslagen werden zur gegenseitigen Unterscheidung codierte Referenzmarken absolut zugeordnet.

Die an den Referenzmarken erzeugten Referenzimpulse können auf verschiedene Weise verwertet werden, z.B. zum Reproduzieren der Nullbezugslage im Zähler, zum Anfahren einer bestimmten Nullbezugslage zu Beginn einer Messung oder zur Kontrolle der Zählergebnisse des Zählers sowie zur Beaufschlagung einer nachgeschalteten Steuereinrichtung.

In der DE-OS 31 02 125 ist eine inkrementale Positionsmeßeinrichtung beschrieben, bei der ein Teilungsträger eine Meßteilung sowie dieser Meßteilung absolut zugeordnete Referenzmarken aufweist. Zur Bestimmung des Absolutwertes der einzelnen Referenzmarken ist zu ihrer Identifizierung der Meßteilung wenigstens eine Zusatzteilung zugeordnet, deren Gitterkonstante von der Gitterkonstanten der Meßteilung abweicht. Diese Abweichung wird jeweils beim Auftreten einer Referenzmarke bestimmt und ist ein Identifizierungsmerkmal für diese Referenzmarke zur Bestimmung ihres Absolutwertes hinsichtlich der gewählten Nullbezugslage.

Aus der DE-AS 12 58 120 ist eine Längenmeßeinrichtung bekannt, bei der zwei stetige Strichfolgen unterschiedlicher Intervallänge auf einer Nivellierplatte vorgesehen sind. In einem Teilungsbereich, welcher der Länge des kleinsten gemeinsamen Vielfachen der Intervallängen der beiden Strichfolgen entspricht, werden die Restintervalle zwischen dem Index der Ablesevorrichtung und den diesem in steigendem oder fallendem Teilungssinn nächstliegenden Teilstrichen der Strichfolgen nacheinander mikrometrisch gemessen und aus den so erhaltenen Mikrometerablesungen die Lage des Index der Ablesevorrichtung in Bezug auf den Teilungsnullpunkt berechnet.

Die US-PS 4,340,305 offenbart eine Einrichtung zur gegenseitigen Ausrichtung zweier Elemente, die jeweils eine Ausrichtmarkierung aufweisen; die beiden identischen Ausrichtmarkierungen bestehen jeweils aus zwei Strichgittern mit unterschiedlichen Gitterkonstanten. Bei der gemeinsamen Abtastung der beiden übereinanderliegenden Ausrichtmarkierungen werden zwei Abtastsignale gewonnen; die exakte gegenseitige Ausrichtung der beiden Elemente liegt dann vor, wenn zwischen den beiden Abtastsignalen keine Phasendifferenz besteht.

Der DE-PS 34 17 176 entnimmt man eine Positionsmeßeinrichtung, bei der ein Teilungsträger zwei Teilungen mit unterschiedlichen Gitterkonstanten aufweist. Zur Abtastung dieser beiden Teilungen ist eine lichtelektrische Abtasteinrichtung mit einer Abtastplatte vorgesehen, die zwei identische Abtastteilungen mit den gleichen unterschiedlichen Gitterkonstanten besitzt; die unterschiedlichen Gitterkonstanten ernsprechen einer Fourierreihe. Bei der Abtastung der beiden Teilungen des Teilungsträgers mittels der beiden Abtastteilungen der Abtastplatte werden zwei Abtastsignale gewonnen, die zur Erzeugung eines resultierenden Signals optisch oder elektrisch zusammengefaßt werden. Das resultierende Signal weist an periodisch wiederkehrenden Stellen auswertbare Amplituden auf, die als Referenzimpulse verwendet werden können. Diese bei der Abtastung der Teilungen über die Meßlänge in äquidistanten Abständen periodisch auftretenden Referenzimpulse sind somit unveränderlich bestimmten Stellen der Teilungen über die Meßlänge entsprechend den vorliegenden Gitterparametern der Teilungen zugeordnet.

Der Erfindung liegt die Aufgabe zugrunde, eine Positionsmeßeinrichtung der genannten Gattung anzugeben, bei der die Lagezuordnung der Referenzimpulse zur Meßteilung frei wählbar ist.

Diese Aufgabe wird erfindungsgemäß durch die kennzeichnenden Merkmale des Anspruchs 1 gelöst.

Die mit der Erfindung erzielen Vorteile bestehen insbesondere darin, daß durch den vorgeschlagenen Vergleich der periodischen Abtastsignale bezüglich ihrer gegenseitigen Phasendifferenz mittels eines Phasenvergleichers bei jeder beliebig vorgegebenen Phasendifferenz Referenzimpulse erzeugt werden können. Die Lagezuordnung der Referenzimpulse zur Meßteilung kann somit durch Variation der vorgegebenen Phasendifferenz beliebig verändert und den jeweiligen Erfordernissen beispielsweise bei der Bearbeitung verschiedener Werkstücke angepaßt werden, ohne daß die Gitterparameter der Meßteilung und der Zusatzteilung geändert werden müssen. Es ergeben sich damit bei Bearbeitungsmaschinen eine flexiblere Bearbeitung von Werkstücken und eine Verkürzung der Bearbeitungsdauer, so daß sich der Kostenfaktor bei der Werkstückherstellung reduziert.

Vorteilhafte Ausbildungen der Erfindung entnimmt man den abhängigen Ansprüchen.

Ausführungsbeispiele der Erfindung werden anhand der Zeichnung näher erläutert.

Es zeigen

Figur 1    schematisch eine erste lichtelektrische Längenmeßeinrichtung in einer Längsansicht,

Figur 2    einen ersten Teilungsträger mit einer Abtastplatte,

Figur 3    ein erstes Signaldiagramm,

Figur 4    schematisch eine zweite lichtelektrische Längenmeßeinrichtung in einer Längsansicht,

Figur 5    einen zweiten Teilungsträger mit zwei Abtastplatten und

Figur 6    ein zweites Signaldiagramm.

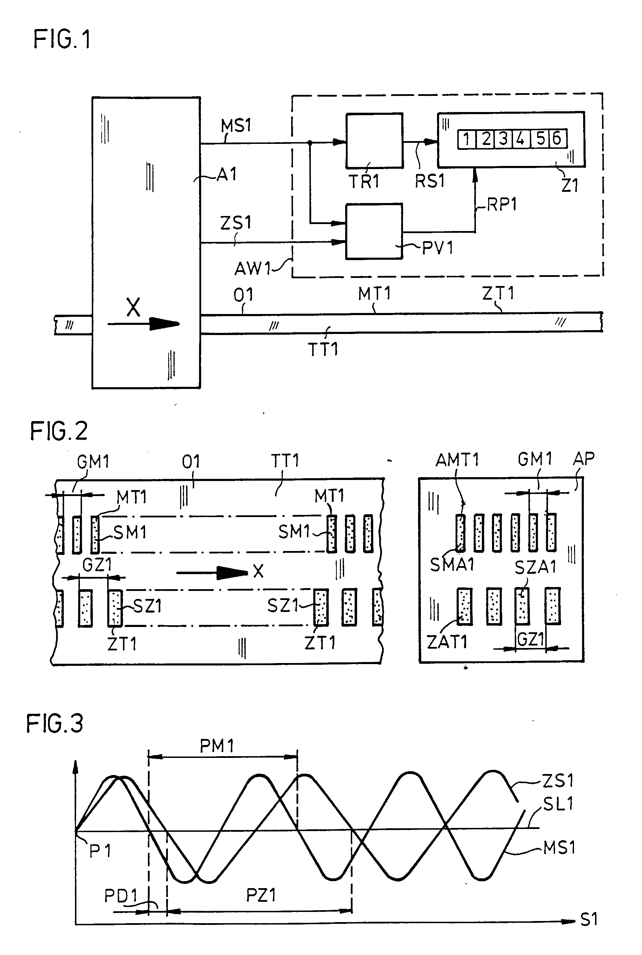

In Figur 1 ist schematisch eine erste lichtelektrische Längenmeßeinrichtung in einer Längsansicht dargestellt, die aus einem ersten Teilungsträger TT1 und aus einer ersten Abtasteinrichtung A1 besteht, die jeweils in nicht gezeigter Weise mit Objekten verbunden sind, deren gegenseitige Relativlage gemessen werden soll; diese beiden Objekte können beispielsweise durch einen Schlitten und das Bett einer nicht gezeigten Bearbeitungsmaschine gebildet sein.

Gemäß Figur 2 ist auf einer Oberfläche O1 des Teilungsträgers TT1 eine inkrementale Meßteilung MT1 in Form eines Strichgitters aufgebracht, deren Teilungsstriche SM1 senkrecht zur Meßteilung X verlaufen und die eine Gitterkonstante GM1 aufweist. Der inkrementalen Meßteilung MT1 ist eine inkrementale Zusatzteilung ZT1 auf der Oberfläche O1 des Teilungsträgers TT1 ebenfalls in Form eines Strichgitters zugeordnet, deren Teilungsstriche SZ1 gleichfalls senkrecht zur Meßrichtung X verlaufen und die eine Gitterkonstante GZ1 aufweist. Die Gitterkonstante GZ1 der Zusatzteilung ZT1 ist größer als die Gitterkonstante GM1 der Meßteilung MT1.

Nach Figur 2 ist dem Teilungsträger TT1 eine Abtastplatte AP in der Abtasteinrichtung A1 zugeordnet, die eine Meßabtastteilung MAT1 und eine Zusatzabtastteilung ZAT1 aufweist. Die Meßabtastteilung MAT1 ist mit der Meßteilung MT1 deckungsgleich identisch und weist die gleiche Gitterkonstante GM1 der Meßteilung MT1 auf; die Teilungsstriche SMA1 der Meßabtastteilung MAT1 verlaufen senkrecht zur Meßrichtung X. Desgleichen ist die Zusatzabtastteilung ZAT1 mit der Zusatzteilung ZT1 deckungsgleich identisch und weist die gleiche Gitterkonstante GZ1 der Zusatzteilung ZT1 auf; die Teilungsstriche SZA1 der Zusatzabtastteilung ZAT1 verlaufen senkrecht zur Meßrichtung X.

In nicht dargestellter Weise sind in der Abtasteinrichtung A1 eine Beleuchtungseinheit mit einem Kondensor sowie zwei Photoelemente angeordnet, die jeweils der Meßabtastteilung MAT1 und der Zusatzabtastteilung ZAT1 zugeordnet sind. Der von der Beleuchtungseinheit ausgehende Lichtstrom wird von dem Kondensor parallel gerichtet und fällt zum einen nach der sukzessiven Durchsetzung der Meßteilung MT1 und der Meßabtastteilung MAT1 auf das zugeordnete Photoelement zur Erzeugung eines Meßabtastsignals MS1 und zum anderen nach der sukzessiven Durchsetzung der Zusatzteilung ZT1 und der Zusatzabtastteilung ZAT1 auf das zugeordnete Photoelement zur Erzeugung eines Zusatzabtastsignals ZS1.

Das Meßabtastsignal MS1 und das Zusatzabtastsignal ZS1 besitzen infolge der Modulation des Lichtstroms durch die Teilungen MT1, MAT1, ZT1, ZAT1 bei der Meßbewegung der Abtasteinrichtung A1 relativ zum Teilungsträger TT1 einen sinusförmigen Verlauf und sind in Figur 3 in Abhängigkeit von der Meßstrecke s1 vergrößert dargestellt. Das Meßabtastsignal MS1 besitzt eine Periodenlänge $PM1 = GM1$ ($GM1 =$ Gitterkonstante der Meßteilung MT1), während das Zusatzabtastsignal ZS1 eine Periodenlänge $PZ1 = GZ1$ ($GZ1 =$ Gitterkonstante der Zusatzteilung ZT1) aufweist.

Das Meßabtastsignal MS1 wird einmal in einem Meßtrigger TR1 in ein Rechtecksignal RS1 umgeformt und einem Zähler Z1 zum Zählen der Teilungsinkremente der Meßteilung MT1 bei der Abtastung durch die Abtasteinrichtung A1 zugeführt. Die Zählergebnisse des Zählers Z1 bilden die Meßwerte für die Relativlage der beiden zueinander verschiebbaren Objekte, die in digitaler Form angezeigt werden können.

Zum anderen wird das Meßabtastsignal MS1 mitsamt dem Zusatzabtastsignal ZS1 einem Phasenvergleicher PV1 zugeleitet, der ihre gegenseitige Phasendifferenz PD1 in Abhängigkeit von der Meßstrecke s1 ermittelt. Aufgrund ihrer unterschiedlichen Periodenlängen PM1, PZ1 besitzen das Meßabtastsignal MS1 und das Zusatzabtastsignal ZS1 nur an bestimmten äquidistanten Punkten P1 der Meßstrecke s1 einen gemeinsamen Nulldurchgang durch ihre Symmetrielinie SL1 und damit die Phasendifferenz $PD1 = O$; die Periodenlänge zwischen diesen Punkten P1 ist von der Differenz $D1 = PZ1 - PM1$ der Periodenlängen PM1, PZ1 des Meßabtastsignals MS1 und des Zusatzabtastsignals ZS1 abhängig. Diese Punkte P1 können als "Referenzmarken" definiert werden, so daß der Phasenvergleicher PV1 an diesen Punkten P1 jeweils einen Referenzimpuls RP1 erzeugt, der beispielsweise zum Nullsetzen des Zählers Z1 oder zur Überprüfung der Richtigkeit der Meßwerte entlang der Meßstrecke s1 verwendet werden kann. Es kann aber auch jede beliebige konstante Phasendifferenz PD1 ≠ O mit der gleichen Periodizität zwischen dem Meßabtastsignal MS1 und dem Zusatzabtastsignal ZS1 bezüglich der Symmetrielinie SL1 als "Referenzmarke" definiert werden; diese konstante Phasendifferenz PD1 = c1 wird am Phasenvergleicher PV1 eingestellt, der beim Erreichen dieser vorgegebenen Phasendifferenz PD1 = c1 einen Referenzimpuls RP1 ausgibt.

In nicht dargestellter Weise können die Teilungsstriche SM1 der Meßteilung MT1 und/oder die Teilungsstriche SZ1 der Zusatzteilung ZT1 auch schräg zur Meßrichtung X verlaufen.

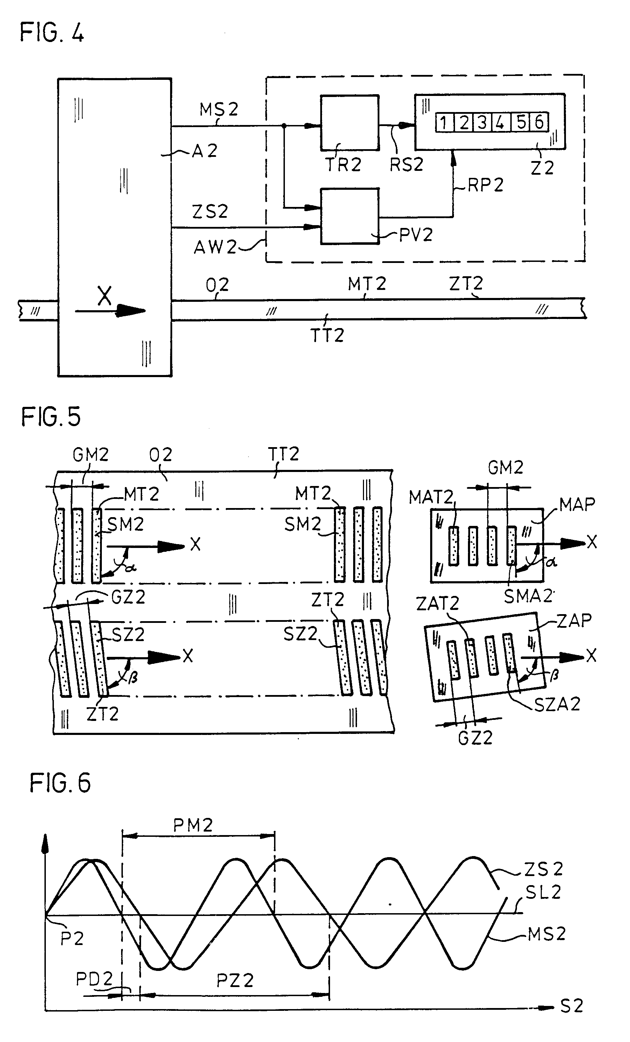

In Figur 4 ist schematisch eine zweite lichtelektrische Längenmeßeinrichtung in einer Längsansicht dargestellt, die aus einem zweiten Teilungsträger TT2 und aus einer zweiten Abtasteinrichtung A2 besteht, die jeweils in nicht gezeigter Weise mit Objekten verbunden sind, deren gegenseitige Relativlage gemessen werden soll; diese beiden Objekte können beispielsweise durch einen Schlitten und das Bett einer nicht gezeigten Bearbeitungsmaschine gebildet sein.

Gemäß Figur 5 ist auf einer Oberfläche O2 des Teilungsträgers TT2 eine inkrementale Meßteilung MT2 in Form eines Strichgitters aufgebracht, deren Teilungsstriche SM2 einen Winkel $\alpha = 90°$ mit der Meßrichtung X einschließen und die eine Gitterkonstante GM2 aufweist. Der inkrementalen Meßteilung MT2 ist eine inkrementale Zusatzteilung ZT2 auf der Oberfläche O2 des Teigungsträgers TT2 ebenfalls in Form eines Strichgitters zugeordnet, deren Teilungsstriche SZ2 einen Winkel $\beta \neq \alpha$ mit der Meßrichtung X einschließen und die eine Gitterkonstante GZ2 aufweist. Die beiden Gitterkonstanten GM2, GZ2 sind gleich groß und jeweils als Abstand zwischen benachbarten Teilungsstrichen SM2, SZ2 definiert.

Nach Figur 5 ist der inkrementalen Meßteilung MT2 des Teilungsträgers TT2 eine Meßabtastplatte MAP mit einer Meßabtastteilung MAT2 in der Abtasteinrichtung A2 zugeordnet, die die gleiche Gitterkonstante GM2 der Meßteilung MT2 aufweist und deren Teilungsstriche SMA2 mit der Meßrichtung X den gleichen Winkel $\alpha = 90°$ einschließen. Desgleichen ist der inkrementalen Zusatzteilung ZT2 des Teilungsträgers TT2 eine Zusatzabtastplatte ZAP mit einer Zusatzabtastteilung ZAT2 in der Abtasteinrichtung A2 zugeordnet, die die gleiche Gitterkonstante GZ2 der Zusatzteilung ZT2 aufweist und deren Teilungsstriche SZA2 mit der Meßrichtung X den gleichen Winkel $\beta \neq \alpha$ einschließen.

Die Zusatzabtastplatte ZAP mit der Zusatzabtastteilung ZAT2 und die Meßabtastplatte MAP mit der Meßabtastteilung MAT2 sind identisch; die Zusatzabtastplatte ZAP ist lediglich gegenüber der Meßabtastplatte MAP um einen Winkel $\alpha - \beta$ in der Zeichenebene der Figur 5 gedreht.

In nicht dargestellter Weise sind in der Abtasteinrichtung A2 eine Beleuchtungseinheit mit einem Kondensor sowie zwei Photoelemente angeordnet, die jeweils der Meßabtastteilung MAT2 und der Zusatzabtastteilung ZAT2 zugeordnet sind. Der von der Beleuchtungseinheit ausgehende Lichtstrom wird von dem Kondensor parallel gerichtet und fällt zum einen nach der sukzessiven Durchsetzung der Meßteilung MT2 und der Meßabtastteilung MAT2 auf das zugeordnete Photoelement zur Erzeugung eines Meßabtastsignals MS2 und zum anderen nach der sukzessiven Durchsetzung der Zusatzteilung ZT2 und der Zusatzabtastteilung ZAT2 auf das zugeordnet Photoelement zur Erzeugung eines Zusatzabtastsignals ZS2.

Das Meßabtastsignal MS2 und das Zusatzabtastsignal ZS2 besitzen infolge der Modulation des Lichtstroms durch die Teilungen MT2, MAT2, ZT2, ZAT2 bei der Meßbewegung der Abtasteinrichtung A2 relativ zum Teilungsträger TT2 einen sinusförmigen Verlauf und sind in Figur 6 in Abhängigkeit von der Meßstrecke s2 vergrößert dargestellt. Das Meßabtastsignal MS2 besitzt eine Periodenlänge PM2 = GM2 (GM2 = Gitterkonstante der Meßteilung MT2), während das Zusatzabtastsignal ZS2 eine Periodenlänge $PZ2 = GZ2/\cos(\alpha-\beta)$ (GZ2 = Gitterkonstante der Zusatzteilung ZT2) aufweist.

Das Meßabtastsignal MS2 wird einmal in einem Meßtrigger TR2 in ein Rechtecksignal RS2 umgeformt und einem Zähler Z2 zum Zählen der Teilungsinkremente der Meßteilung MT2 bei der Abtastung durch die Abtasteinrichtung A2 zugeführt. Die Zählergebnisse des Zählers Z2 bilden die Meßwerte für die Relativlage der beiden zueinander verschiebbaren Objekte, die in digitaler Form angezeigt werden können.

Zum anderen wird das Meßabtastsignal MS2 mitsamt dem Zusatzabtastsignal ZS2 einem Phasenvergleicher PV2 zugeleitet, der ihre gegenseitige Phasendifferenz PD2 in Abhängigkeit von der Meßstrecke s2 ermittelt. Aufgrund ihrer unterschiedlichen Periodenlängen PM2, PZ2 besitzen das Meßabtastsignal MS2 und das Zusatzabtastsignal ZS2 nur an bestimmten äquidistanten Punkten P2 der Meßstrecke s2 einen gemeinsamen Nulldurchgang durch ihre Symmetrielinie SL2 und damit die Phasendifferenz PD2 = O; die Periodenlänge zwischen diesen Punkten P2 ist von der Differenz D2 = PZ2 - PM2 der Periodenlängen PM2, PZ2 des Meßabtastsignals MS2 und des Zusatzabtastsignals ZS2 abhängig. Diese Punkte P2 können als "Referenzmarken" definiert werden, so daß der Phasenvergleicher PV2 an diesen Punkten P2 jeweils einen Referenzimpuls RP2 erzeugt, der beispielsweise zum Nullsetzen des Zählers Z2 oder zur Überprüfung der Richtigkeit der Meßwerte entlang der Meßstrecke s2 verwendet werden kann. Es kannaber auch jede beliebige konstante Phasendifferenz PD2 ≠ O mit der gleichen Periodizität zwischen dem Meßabtastsignal MS2 und dem Zusatzabtastsignal ZS2 bezüglich der Symmetrielinie SL2 als "Referenzmarke" defniert werden; diese konstante Phasendifferenz PD2 = c2 wird am Phasenvergleicher PV2 eingestellt, der beim Erreichen dieser Phasendifferenz PD2 = c2 einen Referenzimpuls RP2 ausgibt.

Da die Abtastelemente in Form der Meßabtastplatte MAP und der Zusatzabtastplatte ZAP identisch sind, erübrigt sich die Herstellung einer gesonderten Zusatzabtastplatte, so daß sich ein einfacherer und damit preiswerterer Aufbau der Abtasteinrichtung A2 ergibt. Die Abtasteinrichtung A2 kann auch aus zwei identischen Abtasteinheiten mit eigenen Beleuchtungseinheiten gebildet sein.

Die Teilungen können wahlweise als Amplitudengitter und/oder als Phasengitter ausgebildet sein.

Die Erfindung ist sowohl bei inkrementalen als auch bei absoluten Positionsmeßsystemen mit Erfolg einsetzbar, die nach dem lichtelektrischen, magnetischen, kapazitiven oder induktiven Meßprinzip arbeiten.

Bei einer absoluten Positionsmeßeinrichtung wird der feinsten Teilung der Codeteilung die wenigstens eine Zusatzteilung zugeordnet. Die gewonnenen Referenzimpulse können zur Überprüfung der Richtigkeit der absoluten Meßwerte herangezogen werden.

**Patentansprüche**

1. Positionsmeßeinrichtung zum Messen der Relativlage zweier Objekte, bei der ein Teilungsträger eine Meßteilung und wenigstens eine Zusatzteilung aufweist, die von einer Abtasteinrichtung zur Erzeugung von periodischen Abtastsignalen mit unterschiedlichen Periodenlängen abgetastet werden, die einer Auswerteeinrichtung zur Bildung von Referenzimpulsen zugeleitet werden, dadurch gekennzeichnet, daß die periodischen Abtastsignale (MS, ZS) in der Auswerteeinrichtung (AW) von einem Phasenvergleicher (PV) bezüglich ihrer gegenseitigen Phasendifferenz (PD) verglichen werden und daß bei einer vorgegebenen Phasendifferenz (PD) zwischen den periodischen Abtastsignalen (MS, ZS) vom Phasenvergleicher (PV) ein Referenzimpuls (RP) erzeugt wird.

2. Meßeinrichtung nach Anspruch 1, dadurch gekennzeichnet, daß die Meßteilung (MT1) und die Zusatzteilung (ZT1) ungleiche Gitterkonstanten (GM1, GZ1) aufweisen und daß die Teilungsstriche (SM1) der Meßteilung (MT1) sowie die Teilungsstriche (SZ1) der Zusatzteilung (ZT1) senkrecht zur Meßrichtung X verlaufen.

3. Meßeinrichtung nach Anspruch 2, dadurch gekennzeichnet, daß die Teilungsstriche der Meßteilung und/oder die Teilungsstriche der Zusatzteilung schräg zur Meßrichtung verlaufen.

4. Meßeinrichtung nach Anspruch 1, dadurch gekennzeichnet, daß die Meßteilung (MT2) und die Zusatzteilung (ZT2) gleiche Gitterkonstanten (GM2, GZ2) aufweisen, daß die Teilungsstriche (SM2) der Meßteilung (MT2) einen Winkel α mit der Meßrichtung X und die Teilungsstriche (SZ2) der Zusatzteilung (ZT2) einen Winkel β ≠ α mit der Meßrichtung X einschließen.

5. Meßeinrichtung nach den Ansprüchen 1 und 4, dadurch gekennzeichnet, daß die Abtasteinrichtung (A2) eine Meßabtastplatte (MAP) mit einer Meßabtastteilung (MAT2) und eine identische Zusatzabtastplatte (ZAP) mit einer identischen Zusatzabtastteilung (ZAT2) aufweist, daß die Meßabtastteilung (MAT2) und die Zusatzabtastteilung (ZAT2) die gleichen Gitterkonstanten (GM2, GZ2) der Meßteilung (MT2) und der Zusatzteilung (ZT2) aufweisen und daß die Teilungsstriche (SMA2) der Meßabtastteilung (MAT2) den winkel α und die Teilungsstriche (SZA2) der Zusatzabtastteilung (ZAT2) den winkel β mit der Meßrichtung X einschließen.

**Claims**

1. Position-measuring device for measuring the relative position of two objects, in which a scale division carrier has a measurement scale division and at least one additional division, which are scanned by a scanner device in order to generate periodic scanner signals with different periodic lengths, and which are passed to an evaluation device in order to form reference pulses, characterised in that the periodic scanner signals (MS, ZS) in the evaluation device (AW) are compared by a phase comparator (PV) with respect to their mutual phase difference (PD), and in that, with a predetermined phase difference (PD) between the periodic scanner signals (MS, ZS), a reference pulse (RP) is generated by the phase comparator (PV).

2. Measuring device according to claim 1, characterised in that the measurement scale division (MT1) and the additional scale division (ZT1) have unequal grid constants (GM1, GZ1), and in that the division markings (SM1) of the measurement scale division (MT1) and the division markings (SZ1) of the additional scale division (ZT1) extend vertically with respect to the direction X of measurement.

3. Measuring device according to claim 2, characterised in that the division markings of the measurement scale division and/or the division markings of the additional scale division extend obliquely with respect to the direction of measurement.

4. Measuring device according to claim 1, characterised in that the measurement scale division (MT2) and the additional scale division (ZT2) have the same grid constants (GM2, GZ2), in that the division markings (SM2) of the measurement scale division (MT2) enclose an angle with the direction X of measurement, and the division markings (SZ2) of the additional division (ZT2) enclose an angle $\beta$ = with the direction X of measurement.

5. Measuring device according to claims 1 and 4, characterised in that the scanner device (A2) has a measurement scanning plate (MAP) with a measurement scanning scale division (MAT2) and an identical additional scanning plate (ZAP) with an identical additional scanning scale division (ZAT2), in that the measurement scanning scale division (MAT2) and the additional scanning scale division (ZAT2) have the same grid constants (GM2, GZ2) as the measurement scale division (MT2) and the additional scale division (ZT2), and in that the division markings (SMA2) of the measurement scanning scale division (MAT2) enclose the angle , and the division markings (SZA2) of the additional scanning division (ZAT2) enclose the angle $\beta$ with the direction X of measurement.

**Revendications**

1. Dispositif de mesure de position pour mesurer la position relative de deux objets, dans lequel un support de graduation porte une graduation de mesure et au moins une graduation auxiliaire qui sont lues par un dispositif de lecture pour produire des signaux de lecture périodiques de durée de période variable, lesquels signaux sont envoyés à un dispositif d'exploitation pour former des impulsions de référence, caractérisé par le fait que les signaux de lecture (MS, ZS) périodiques sont comparés au niveau de leur déphasage (PD) mutuel par un comparateur de phase (PV) à l'intérieur du dispositif d'exploitation (AW) et par le fait qu'en présence d'un déphasage (PD) prédéterminé entre les signaux de lecture (MS, ZS), le comparateur de phase (PV) délivre une impulsion de référence (RP).

2. Dispositif de mesure de position selon la revendication 1, caractérisé par le fait que la graduation de mesure (MT1) et la graduation auxiliaire (ZT1) présentent des constantes de réseau (GM1, GZ1) différentes et par le fait que les repères graduation (SM1) de la graduation de mesure (MT1) et les repères de graduation (SZ1) de la graduation auxiliaire (ZT1) sont perpendiculaires à la direction de mesure X.

3. Dispositif de mesure de position selon la revendication 2, caractérisé par le fait que les repères de graduation de la graduation de mesure et/ou les repères de graduation de la graduation auxiliaire sont sont inclinés par rapport à la direction de mesure.

4. Dispositif de mesure de position selon la revendication 1, caractérisé par le fait que la graduation de mesure (MT2) et la graduation auxiliaire (ZT2) présentent des constantes de réseau (GM2, GZ2) identiques et par le fait que les repères graduation (SM2) de la graduation de mesure (MT2) forment un angle $\alpha$ avec la direction de mesure X et les repères de graduation (SZ2) de la graduation auxiliaire (ZT2) forment un angle $\beta \neq \alpha$ avec la direction de mesure X.

5. Dispositif de mesure de position selon les revendications 1 et 4, caractérisé par le fait que le dispositif de lecture (A2) comporte une plaque de lecture de mesure (MAP), avec une graduation de lecture de mesure (MAT2) et une plaque de lecture auxiliaire (ZAP) identique avec une graduation de lecture auxiliaire (ZAT2) identique, par le fait que la graduation de lecture de mesure (MAT2) et la graduation de lecture auxiliaire (ZAT2) ont les mêmes constantes de réseau (GM2, GZ2) que la graduation de mesure (MT2) et la graduation auxiliaire (ZT2) et par le fait que les repères de graduation (SMA2) de la graduation de lecture de mesure (MAT2) forment l'angle $\alpha$ et les repères de graduation (SZA2) de la graduation de lecture auxiliaire (ZAT2) l'angle $\beta$ avec la

direction de mesure X.

**FIG.1**

**FIG.2**

**FIG.3**

FIG. 4

MS2

A2

TR2    RS2

1 2 3 4 5 6

Z2

RP2

ZS2

AW2

PV2

X

O2    MT2    ZT2

TT2

FIG. 5

GM2    O2    TT2    GM2

MT2    MT2    MAT2    MAP

SM2    SM2    X    α

X    SMA2

α

GZ2    ZAT2    ZAP

SZ2    ZT2

SZ2    X    β

X

β    SZA2

ZT2    GZ2

FIG. 6

PM2

ZS2

SL2

MS2

P2

PD2    PZ2

S2